# EUROPEAN PATENT APPLICATION

(11) **EP 2 660 532 A1**
(43) Date of publication of application: **06.11.2013**
(21) Application number: 12192809.7
(22) Date of filing: 15.11.2012
(51) Int. Cl.: F24J 2/04, F24J 2/52, F24J 2/46

(54) **A solar panel system**

(30) Priority: 03.05.2012 IT RE20120034
(71) Applicant: Luxferov S.r.l., 42033 Carpineti (IT)
(72) Inventor: Belloni, Mario, 42033 CARPINETI (REGGIO EMILIA) (IT)
(74) Representative: Corradini, Corrado

(57) **Abstract**

A covering element (10) of a building, which covering element (10) comprises a substantially slab-shaped support body (20) and a solar collector fixed to a surface (22) of the support body (20) destined to be exposed to the sun, where the support body (20) comprises at least a sealed passage channel (27) for a fluid, able to cross the support body (20) and provided with at least an access mouth (28) and an outlet mouth (29) located at least at a surface (23, 24) of the support body (20).

## Description

### TECHNICAL FIELD

The present invention relates to solar panels able to produce energy with a photovoltaic process.

### PRIOR ART

Solar panels are known which comprise a support plane of a plurality of photovoltaic cells normally connected in series, which can act as covering planes for buildings, or sometimes even as coverings for the façades of the buildings.

Known photovoltaic panels already include a rear support surface, generally made of an insulating material having a low thermal expansion, such as tempered glass, ceramic or polymer material, on which are placed, in order: a thin layer of vinyl acetate, an array of photovoltaic cells that are electrically connected together, a second acetate layer and a transparent material that acts as a front mechanical protection for the photovoltaic cells, typically tempered glass.

All this is made congruent by a die-casting process, which transforms the acetate into an inert adhesive.

The electrical terminals which connect the cells are enclosed in a watertight terminal box generally fixed to the rear support surface, and the "sandwich" structure of the solar panel thus obtained is fixed to an aluminium frame, which will be used for fixing the panel itself to support structures.

The dimensions of the most common crystalline silicon photovoltaic panels range in size from 0.5 m² to 2.5 m², generally 1.5 m².

The more currently-used format is about 800 x 1600 mm with a thickness of about 45 mm.

Using from 54 to 60 photovoltaic cells suitably connected electrically to one another, a voltage of about 32 V and power of about 200 W are obtained. About 5 to 7 m² of panels are required to obtain 1 kW of power.

The above data justify the widespread use of the panels.

The known panels, however, are not free from drawbacks and defects, which greatly limit their use.

First, they involve a considerable waste of energy, because they do not exploit the thermal energy released by the sun's rays.

Moreover, they have a structure which makes it not always easy to blend them in covering or cladding surfaces.

Further, the solar panels are typically mounted on roofs or walls set on special support structures, which result in an aesthetic impact on the building; also, if they are not properly sealed, they may detach from the roofs in high wind conditions.

Finally the panels are sensitive to temperature increases that are responsible for reducing the electrical efficiency of the photocells.

An aim of the present invention is to obviate the mentioned drawbacks in the prior art, with a solution that is simple, rational and relatively inexpensive. These aims are achieved by the characteristics of the invention set down in the independent claim. The dependent claims outline preferred and/or particularly advantageous aspects of the invention.

### DISCLOSURE OF THE INVENTION.

The invention in particular provides a covering element of a building which comprises a substantially plate-like support body and a solar collector fixed to a surface of the support body that will be exposed to the sun.

According to the invention, the covering element comprises at least a sealed passage channel for a fluid which is destined to pass through the support body and which is provided with at least an access mouth and an outlet mouth located at least at a surface of the support body.

Thanks to this solution, the covering element transfers the heat, created by the Sun's radiation on the solar collector, whether it is a photovoltaic solar panel or a solar thermal panel, thus enabling exploitation of the thermal energy, while at the same time improving the electrical efficiency of the photovoltaic panel and maintaining the temperature of the photovoltaic cells at an acceptable level.

Further, thanks to this solution the inside-to-outside insulation of the building in which the covering element is installed can be improved, whether it is installed on the roof or on a wall of the building wall.

The covering element advantageously comprises a plurality of substantially-parallel passage channels, access mouths and outlet mouths of which are placed respectively on two opposite lateral surfaces of the support body.

In this way the entire surface of the covering element is affected by the passage channels by increasing the heat exchange surface.

In another aspect, the covering element includes at least an inlet manifold fixed at a lateral surface of the support body and suitable for connecting the access mouths to one another, and at least an outlet manifold fixed at the opposite lateral surface of the support body and suitable for interconnecting the outlet mouths.

Advantageously, each of the inlet and outlet manifolds comprises at least a connector, respectively of the male-female type through which the fluid enters or exits from the respective inlet and outlet manifold.

Further, in an aspect of the invention, the male-female connectors are located on opposite sides of the covering itself in such a way that when a plurality of the covering elements are installed to realise a portion of a roof of a building, the male connector of a covering element couples with the female connector of an adjacent covering element.

Thanks to these solutions the individual passage channels and the covering elements can easily be fluid-dynamically connected, in series or parallel, depending on construction requirements.

In a further aspect, the invention discloses a roofing system which comprises a plurality of covering elements as described above, flanked to one another, or partially overlapping, substantially continuously and able to achieve coverage of a portion of a building.

### BRIEF DESCRIPTION OF THE DRAWINGS.

Further characteristics and advantages of the invention will emerge from a reading of the following description, provided by way of non-limiting example, with the aid of the figures illustrated in the attached tables.

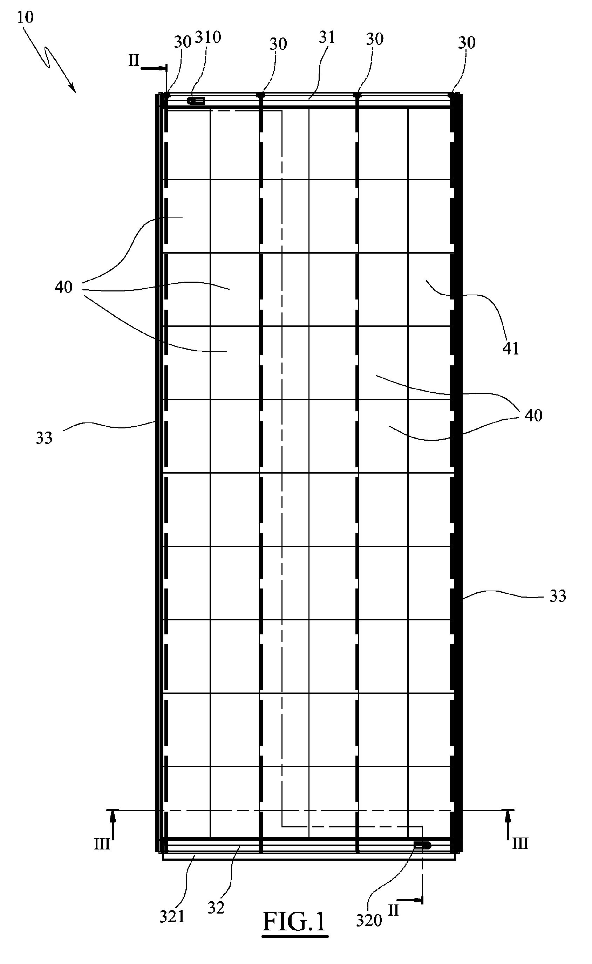

Figure 1 is a plan view of a photovoltaic panel according to the invention.

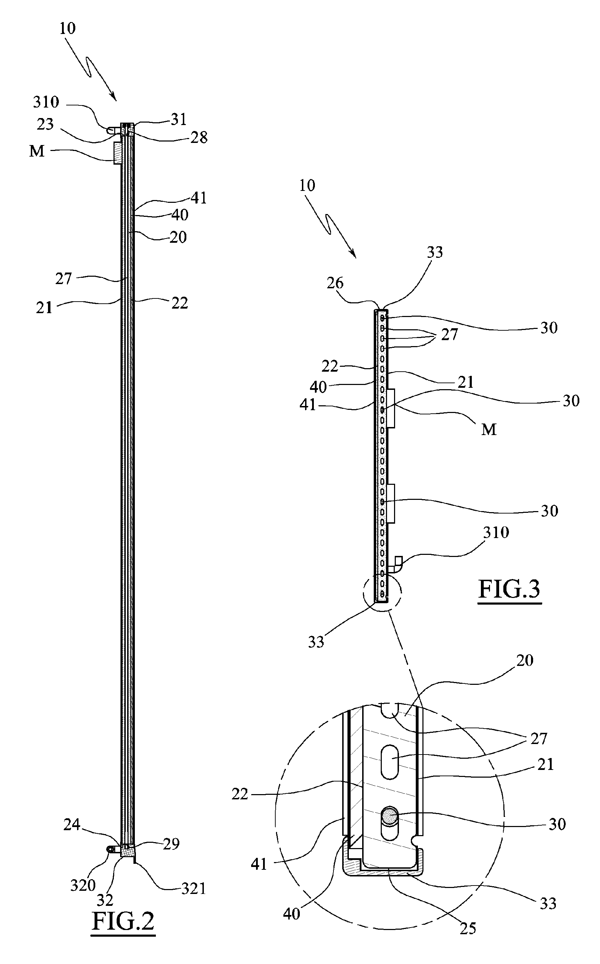

Figure 2 shows section II-II of figure 1.
Figure 3 shows section III-III of figure 1.
Figure 4 is a plan view of a covering portion made with a plurality of photovoltaic panels according to the invention.
Figure 5 shows section V-V of figure 4.
Figure 6 is an enlarged detail of figure 5.
Figure 7 shows section VII-VII of figure 4.
Figure 8 is an enlarged detail of figure 7.
Figure 9 shows section IX-IX of figure 4.
Figure 10 is an enlarged detail of figure 9.
Figure 11 is a plan view from below of a covering according to the invention, which illustrates the electrical connection between the photovoltaic panels.

### BEST WAY OF CARRYING OUT THE INVENTION.

With particular reference to the figures, reference numeral 10 denotes a photovoltaic panel adapted to define a covering element of a roof, a wall, or any surface of a building exposed to the sun.

The photovoltaic panel 10 comprises a substantially plate-like support body 20, preferably and advantageously a ceramic slab or the like or, alternatively, a plate made of plastic or tempered glass or the like.

In the illustrated example the supporting body 20 has a shape of a parallelepiped rectangle defining a lower base 21 and an upper base 22, substantially large, two smaller lateral walls 23, 24 and two lateral walls 25 and 26 having a greater longitudinal extension.

The supporting body 20 is, for example, a monolithic body made of a ceramic material, such as a slab or the like.

A plurality of parallel and equidistant longitudinal passage channels 27 are fashioned in the support body 20, crossing from one side to another of the support body 20.

In practice, the longitudinal axes of the passage channels 27 are arranged parallel to the longitudinal axis of the support body 20, so that each of the passage channels 27 defines an access mouth 28, located at one of the smaller lateral walls 23 or 24 (in the example the lateral wall 23) and an outlet 29 located at the other smaller lateral wall 24.

Each passage channel 27 is substantially sealed, in the sense that the inner surface of the passage channels 27 is waterproof.

In the illustrated example, the transversal section of each passage channel 27 is substantially elliptical with a larger axis parallel to the bases 21 and 22 of the support body 20.

The photovoltaic panel 10 also comprises an inlet manifold 31 fixed to the lateral wall 23 of the support body 20 into which the access mouths 28 open. In practice the inlet manifold 31 is fashioned from a metal profiled member (or other suitable material) a cross section of which is substantially C-shaped, with the concavity thereof facing the lateral wall 23.

In particular, the inlet manifold 31 is suitable for interconnecting all the access mouths 28, so that the passage channels are substantially connected in parallel.

The inlet manifold 31 is fixed to the lateral wall 23 by means of one or more anchoring pins 30, for example, individually insertable and retained in a passage channel 27.

The inlet manifold 31 comprises a connecting tube 310 connecting the internal environment to the inlet connector 31 with the environment external thereof; in practice the connecting pipe 310 branches off from the inlet manifold at a surface thereof that is opposite the lower base 22 of the support body 20.

The photovoltaic panel 10 further comprises an outlet manifold 32 fixed to the lateral wall 24 of the support body 20, into which the outlet mouths 29 open. The outlet manifold 32, in practice, is made from a metal profiled element (or other suitable material) a cross section of which is substantially C-shaped, with a concavity thereof facing the lateral wall 24.

In particular, the outlet manifold 32 is destined to interconnect all the outlet mouths 29, such that the passage channels are substantially connected in parallel.

The outlet manifold 32 comprises a further connecting tube 320 connecting the internal environment to the outlet manifold 32 with the outside environment thereof; in practice the connecting tube 320 branches off from the outlet manifold 32 at a surface thereof which is opposite the lower base 22 of the support body 20.

The outlet manifold 32 is also fixed to the lateral wall 24 by means of one or more anchoring pins 30, for example, individually destined to be inserted and retained in a passage channel 27 of the support body 20.

In practice, in the preferred embodiment shown in the figures the pins 30 are connecting rods, for example four in number, which are inserted into respective passage channels 27, longitudinally through the supporting body 20, and by means of nuts retain both ends of the inlet and outlet manifolds, respectively 31 and 32.

The inlet and outlet manifolds, respectively 31 and 32, might instead be configured so that the passage channels 27 of each supporting body 20 are connected together in series, creating a substantially continuous coil within the support body 20.

The connecting pipes 310, 320 are for example of a male-female type so that they can be mutually coupled, as will become apparent in the following. For example, when a plurality of photovoltaic panels 10 is installed to realise a portion of roof or wall of the building, the connecting tube 310 (for example male) of an inlet manifold 31 couples with the female connecting tube 320, of an outlet manifold 32 of an adjacent photovoltaic panel 10.

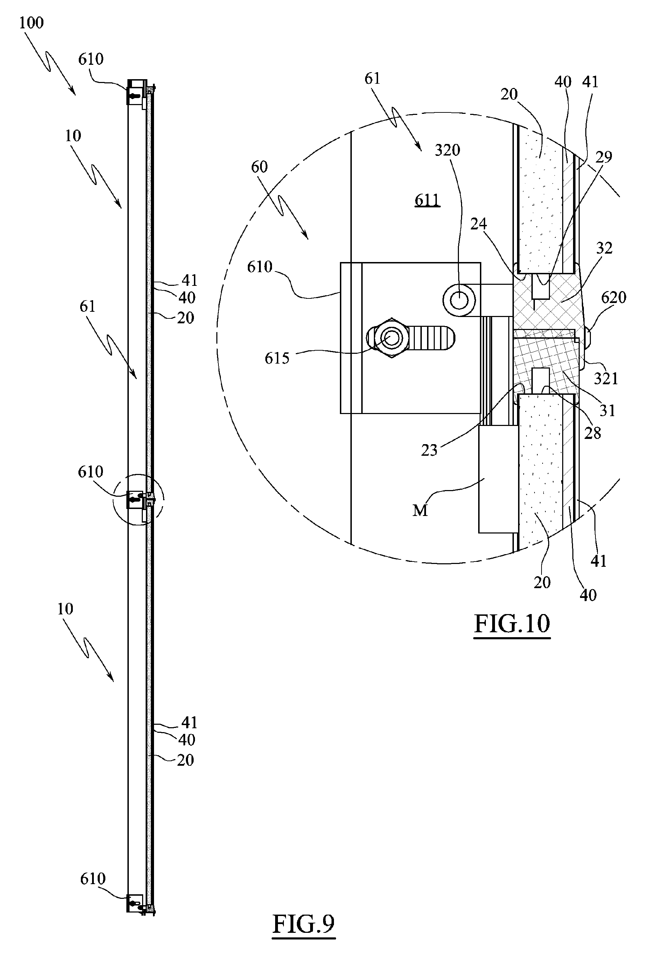

As shown in the detail of figure 10, one of the inlet and outlet manifolds 31 and 32 (in the example the inlet manifold 32) comprises a projecting tab 321 protruding in the longitudinal direction and able to superiorly superpose the join line between the outlet manifold 32 of a photovoltaic panel 10 and the inlet manifold 31 of the photovoltaic panel 10 adjacent thereto and hydraulically connected via the respective connecting tubes 310 and 320. The photovoltaic panel 10 further comprises a pair of lateral frames 33, which for example are individually made by metal profiles (or another suitable material) having a C-shaped transversal section. The lateral frames 33 can be fixed and respectively delimit the lateral walls 25 and 26 of the support body 20.

The solar collector is fixed to the upper base 22 of the support body 20, which in this case is photovoltaic and comprises a plurality of photovoltaic cells 40 fixed to the upper base 22 and designed to cover the entire surface of the upper base itself, as known by the skilled person in the sector.

The photovoltaic cells 40 are for example superiorly protected by a transparent plate 41 that allows solar radiation to pass, e.g. made of tempered glass or the like.

The lateral frames 33, for example, are such as to embrace also a small end portion of the transparent plate 41, so that they are securely fixed to the support body 20 and are effectively a single body therewith.

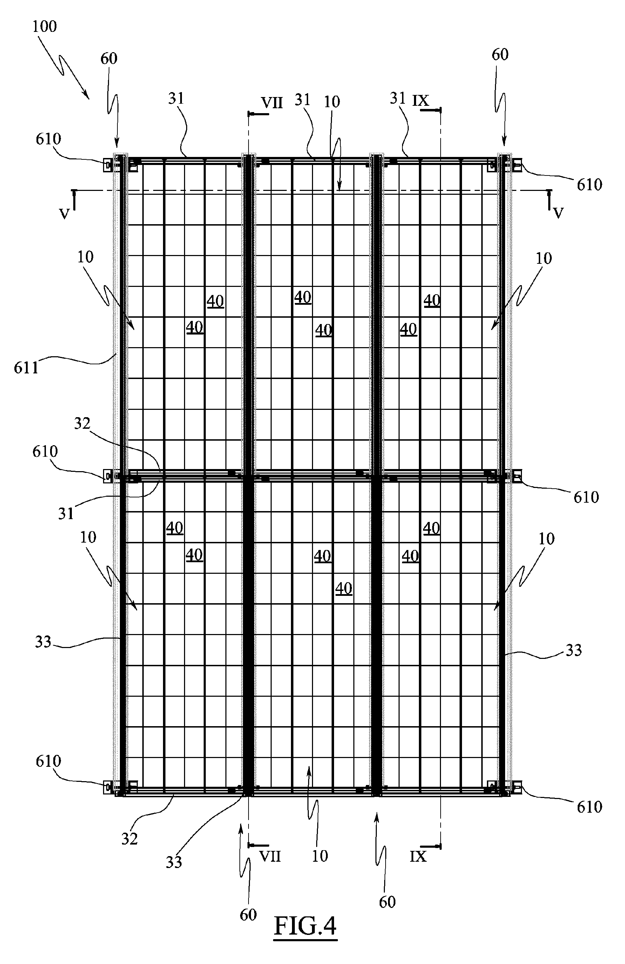

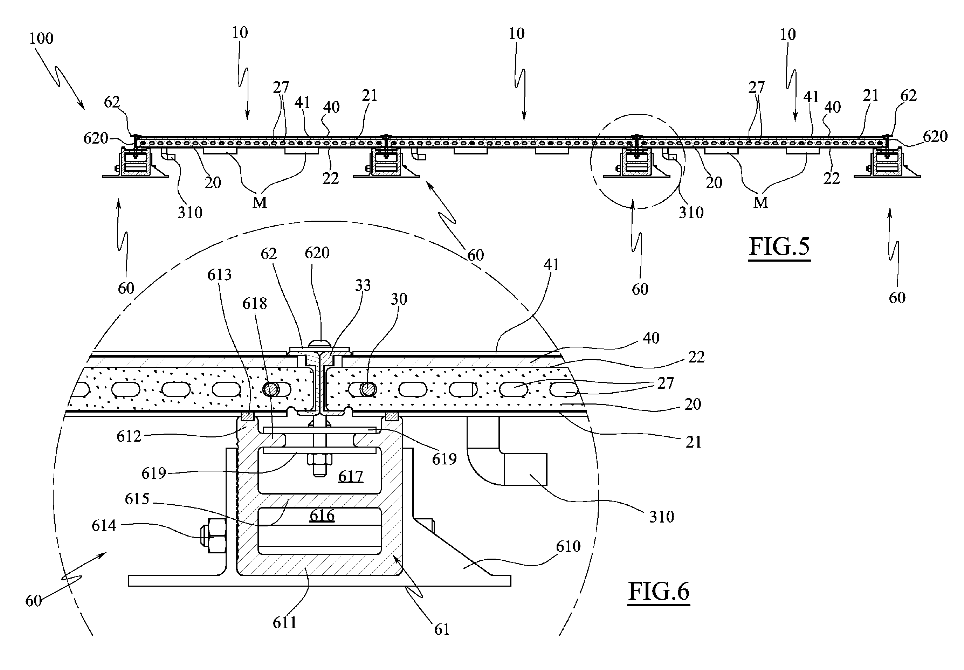

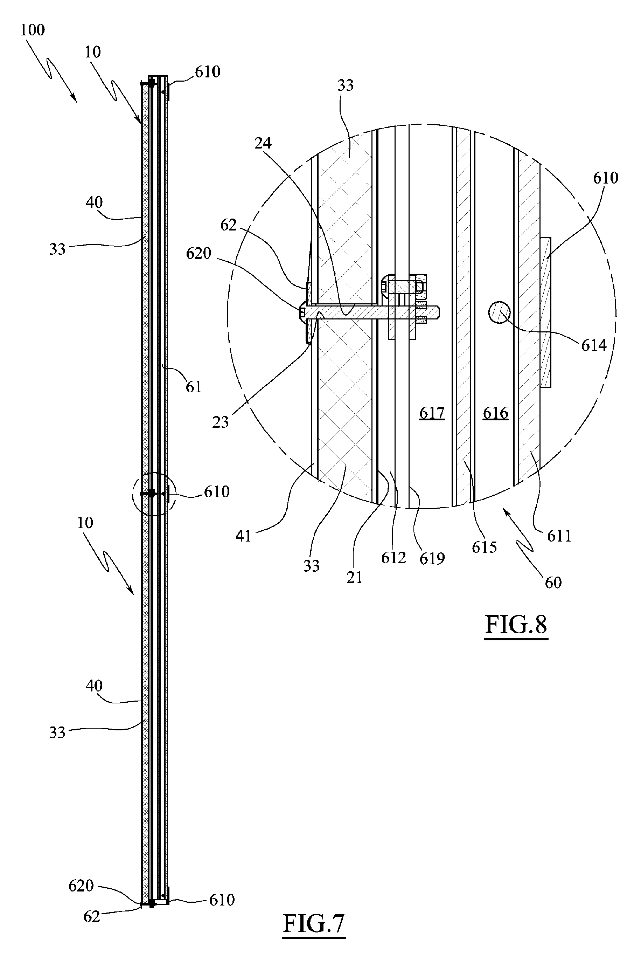

With particular reference to figures 4 to 10, a cover 100 is illustrated, for example, a portion of a roof or cladding of a wall of a building or the like.

The cover 100, in the example, is suitable for realising a portion of the roof, in particular an entire plane of a roof by means of the covering thereof by means of a plurality of photovoltaic panels 10, as described above, arranged side by side (or partially overlapping) such as to cover the entire open surface of the roof.

The cover 100 comprises a plurality of blocking devices 60 which define a supporting structure 10 for the photovoltaic panels and which are thus able to block the photovoltaic panels 10 to the beams defining the roof of the building or even possibly the wall of the building itself.

The blocking devices 60 comprise a longitudinal support member 61 that can be arranged parallel to the direction of slope of the roof, between the ridge line and the gutter line, for example fixed to the beams which form the support of the cover 100 as described below.

The longitudinal members 61 are arranged parallel and equidistant, for example with a pitch equal to a width of a photovoltaic panel 10 considered at one of the smaller lateral walls 23 or 24 of the support body 20.

In this way each of the lateral members 61 can simultaneously support one or more pairs of photovoltaic panels 10, flanked and aligned along the perpendicular direction to the line of the roof ridge.

As shown in figure 10, each lateral member 61 is supported by one or more aligned guide bodies 610, each having a U-shaped transversal section, with the concavity facing upwards, which are individually fixed to the beams that define the roof of the building, for example by means of threaded members as known to experts in the field.

A profiled bar 611 is snugly slidably received in the concave portion of each guide body 610, the profiled bar 611 being for example made of Kevlar and being provided with two salient appendages 612 developing all along the bar 611, which each define a top supporting surface for a respective photovoltaic panel 10, i.e. the lower base 21 of the support body 20, for example by interposing a seal 613, which can be a sealant foam.

The profiled bar 611 is secured to the guide body 60 by means of a blocking screw 614.

The profiled bar 611 is internally hollow and exhibits a longitudinal wall 615 for sub-dividing the internal volume of the profiled bar itself into two areas, of which a closed lower cavity 616 and a superiorly-open upper cavity 617. Two internally-projecting shelves 618 are defined on the internal lateral walls of the profiled bar 611, which shelves 618 are located above the upper cavity 617 and which shelves 618 can support, on opposite sides thereof, a pair of clamping plates 619 which superiorly close the upper cavity 617.

In practice, the upper cavity 617 defines a drainage channel along the inclined slope of the roof into which any infiltrating water will flow, and which is in fluid communication with the gutter located downstream thereof, for example via filter grids which prevent the entry of small birds or similar animals inside the cavities 616 and 617.

After the photovoltaic panels 10 have been rested on the support plane defined by the salient appendages 612, four (or two) thereof can be fixed simultaneously by means of a fixing bracket 62, for example circular, a lower surface of which rests on the edges of two or four adjacent photovoltaic panels 10 and is fixed to the profiled bar 611 by means of a clamping bolt 620, or an expanding rivet or like threaded means, so as to clamp the four photovoltaic panels 10 between the bracket 62 and the seals 613 located above the salient appendages 612.

In practice, the fastening bolt 620 is inserted into a hole afforded in the fixing plates 619, thus fastening the photovoltaic panels 10 to the longitudinal members 61.

With this arrangement, a single fixing bolt 619 can block four adjacent photovoltaic panels 10 at the same time.

The photovoltaic panels 10 of the cover 100 are joined to each other substantially continuously, for example both in the direction of the slope of the roof and in a parallel direction to the ridge of the roof.

In practice, in the assembled configuration a photovoltaic panel 10 exhibits a smaller lateral wall, for example 24, in close contact with the smaller lateral wall, for example 23, of an adjacent photovoltaic panel 10 (by means of interposing the input and output manifolds, respectively 31 and 32) and a larger lateral wall 25 in close contact with a larger lateral wall (by means of interposing of the lateral frames 33), for example 26, of an additional photovoltaic panel 10.

In a preferred embodiment, the photovoltaic panels 10 are in a sufficient number to cover the entire layer of a roof; in this way the roof cover 100 is actually composed, at least as regards the slope more exposed to the sun's rays, of the photovoltaic panels themselves.

In practice, the covering 100 is arranged such as to completely sealingly close the building; in fact, the projecting tab 321 prevents any infiltration of liquid between the photovoltaic panels 10 in the join area (parallel to the ridge line of the roof) between the input manifold 31 and the outlet manifold 32, while the possible infiltrations that may interest the joint area (perpendicular to the ridge line of the roof) between the lateral frames 33 of the photovoltaic panels 10 is channelled towards the gutter, flowing inside the upper cavity 617 of the profiled bar 61, which is aligned in plan view with the join line of the two solar panels 10.

The cover 100 further comprises fluid pumping means, for example air or water or another liquid coolant (not illustrated as it is a blower or pump), which is connected in inlet to one or more of the input manifolds 31 of the photovoltaic panels 10 and, for example, is connected to a heat exchanger.

The fluid pumped by the pumping means is able to pass through the passage channels 27 and the inlet and outlet manifolds, respectively 31 and 32, so that heat can be transferred from the photovoltaic panels 10 (in any case from the photovoltaic cells 40) to the fluid that crosses the passage channels 27.

The heat transferred to the fluid can be used, via the heat exchanger, or simply dissipated.

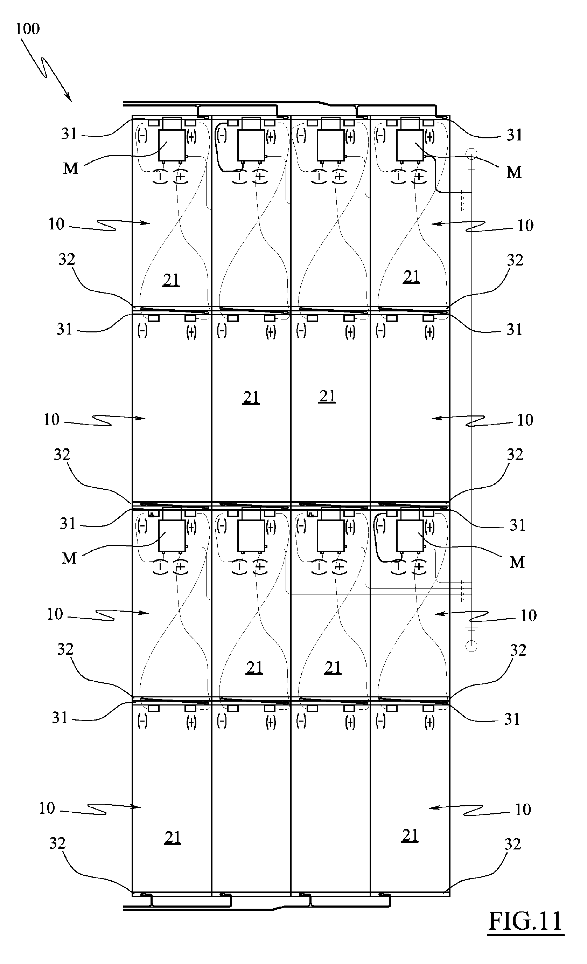

With reference to figure 11, the following describes the electrical connection between the photovoltaic panels 10 of the covering 100.

For example, each photovoltaic panel generates an open circuit voltage Voc of 25Vdc and a short circuit current lsc of 9A in standard test conditions, i.e. solar radiation of 1000W/mq, temperature of 25°C and air mass AM = 1.5. Each pair of solar panels 10 is connected in series to an input of a Micro Inverter M, for example fixed to the lower base 21 of the support body 20, so that the positive pole of the first photovoltaic panel 10 is connected to the negative pole of the second panel PV 10 of the pair, thus obtaining an open circuit voltage Voc of 50Vdc and a maximum short circuit current lsc of 9A in standard conditions.

The output heads of each Micro Inverter M are connected in parallel to the grid; once the Micro Inverter M recognises the grid it activates by inputting energy produced by the photovoltaic panels 10 into the power grid (about 340W under standard conditions).

In practice, it has been found that a support surface of a photovoltaic panel 10 according to the invention can advantageously be a ceramic slab support body with parallel passage channels opening out on two opposite sides of the slab.

The dimensions of the plate are preferably between 1500 mm and 2000 mm in the longitudinal direction and between 500 and 1000 mm in the perpendicular direction.

According to the invention a suitable number of photovoltaic panels is placed on a support structure that can bear at least two rows of panels located side by side, where the passage channels of a panel are aligned with the passage channels of the panels of the same row and are placed in sealed communication between them.

Manifolds are advantageously provided on the two sides of each support body, which manifolds set the aligned passage channels in communication and hydraulically connect them in parallel or in series.

The passage channels act as ventilation channels or insulating channels, if struck by the air, but they can be flowed through by water or another suitable liquid which collects the heat transmitted from the sun and heats up, enabling an increase in efficiency of the photovoltaic panels, and the use of the heat for domestic purposes.

The support structure of the photovoltaic panels advantageously comprises means for draining and collecting rainwater collection, as well as any liquid infiltrations that might pass between the photovoltaic panels.

The invention thus conceived is susceptible to numerous modifications and variations, all falling within the inventive concept.

Moreover all details can be replaced with other technically equivalent elements.

In practice the materials used, as well as the shapes and dimensions, may be any according to requirements without thereby forsaking the protective scope of the appended claims.

## Claims

1. A covering element (10) of a building, which covering element (10) comprises a substantially slab-shaped support body (20) and a solar collector fixed to a surface (22) of the support body (20) destined to be exposed to the sun, **characterised in that** the support body (20) comprises at least a sealed passage channel (27) for a fluid, able to cross the support body (20) and provided with at least an access mouth (28) and an outlet mouth (29) located at least at a surface (23, 24) of the support body (20).

2. The covering element (10) of claim 1, **characterised in that** it comprises a plurality of passage channels (27), substantially parallel to one another, access mouths (28) and outlet mouths (29) of which are respectively located on two opposite lateral surfaces (23, 24) of the support body (20).

3. The covering element (10) of claim 2, **characterised in that** it comprises at least an inlet manifold (31) fixed at a lateral surface(23) of the lateral surfaces (23) of the support body (20) and able to connect the access mouths (28) to one another, and at least an outlet manifold (32) fixed at the opposite lateral surface (24) of the support body (20) and able to connect the outlet mouths (29) to one another.

4. The covering element (10) of claim 3, wherein each of the inlet manifolds (31) and outlet manifolds (32) comprises at least a connector (310, 320), respectively of a male-female type, through which the fluid enters or exits from the respective inlet manifold and outlet manifold.

5. The covering element (10) of claim 4, wherein the male-female connectors (310, 320) are positioned on opposite sides of the covering element (10) in such a way that when a plurality of the covering elements (10) is installed to realise a portion of a covering (100) of a building, the male connector (310) of a covering element (10) couples with the female connector (320) of an adjacent covering element (10).

6. The covering element (10) of claim 1, **characterised in that** it comprises at least a lateral frame (33) able to delimit at least a lateral surface (25, 26) of the support body (20).

7. A covering system **characterised in that** it comprises a plurality of covering elements (10) according to any one of the preceding claims, flanked to one another substantially continuously and able to define a cover (100) of at least a portion of building.

8. The system of claim 7, wherein the covering elements (10) are in such a number as to cover an entire plane of a roof.

9. The system of claim 7, **characterised in that** it comprises a bearing structure able to support the covering elements (10) comprising a plurality of longitudinal members (61) suitable for arranging with a longitudinal axis thereof parallel to a maximum sloping direction and internally defining a drainage channel (617) open at opposite ends thereof.

10. The system of claim 9, wherein the longitudinal members (61) are arranged parallel and equidistant with a pitch equal to a width of a covering element (10) considered in a direction parallel to the ridge line of the roof.

11. The system of claim 7, wherein at least two of said covering elements (10) are fixed simultaneously by means of a fixing bracket (62) a lower surface of which rests on the edges of said at least two adjacent covering elements (10).

12. The system of claim 8, wherein the cover (100) is arranged such as to completely sealingly close the building.

13. The system, according to any of the preceding claims, **characterised in that** it comprises fluid pumping means, which is connected in inlet to at least one of said input manifolds (31) of the covering element (10).

14. The system of claim 13, wherein said fluid pumping means is connected to a heat exchanger.
